# EUROPEAN PATENT SPECIFICATION

(11) **EP 4 668 305 B1**
(45) Date of publication and mention of the grant of the patent: **02.12.2026**
(21) Application number: 25183751.4
(22) Date of filing: 18.06.2025
(51) Int. Cl.: H01H 1/60, H01H 73/04

(54) **PULL-UP CIRCUIT FOR CIRCUIT BREAKER CONTACTS AND METHOD OF OPERATION**
HOCHZIEHSCHALTUNG FÜR SCHUTZSCHALTERKONTAKTE UND VERFAHREN ZU DEREN BETRIEB
CIRCUIT DE TIRAGE POUR CONTACTS DE DISJONCTEUR ET MÉTHODE DE FONCTIONNEMENT

(30) Priority: 19.06.2024 US 202463661700 P
(43) Date of publication of application: 24.12.2025
(73) Proprietor: Vertiv Corporation, Westerville, OH 43082 (US)
(72) Inventor: BALMA, Luigi, Bologna (IT); COLOMBARI, Paolo, Bologna (IT); ABDOU, John Ezzat Fahmy, Osteria Grande (IT); BARBIERI, Mauro, Bologna (IT)
(74) Representative: Kilburn & Strode LLP

(56) References cited:
- JP-A- H02 278 620
- US-A1- 2015 348 721
- US-B1- 6 430 021

## Description

### PRIORITY

This Application claims priority to U.S. Provisional Patent Application Number 63/661,700, entitled "Pull-Up Circuit for Circuit Breaker Contacts," filed June 19, 2024.

### TECHNICAL FIELD

Apparatuses and methods consistent with example embodiments relate to electrical/electronics equipment units, and more particularly to an electrical/electronics power distribution unit with a single piece frame with integrated cable trough, lifting handles, and optional welded base.

### BACKGROUND

Industrial circuit breakers are widely used components in modern electrical systems, designed to protect circuits from overcurrents that can cause damage, inefficiency, or fire hazards. Circuit breakers function as automatic switches that open (or "trip") when current exceeds a predetermined level. This in turn interrupts current flow to prevent harm to the system(s) which is it protecting. As opposed to fuses, which must be replaced after one use, circuit breakers can be reset and reused. This reusability makes circuit breakers a practical and cost-effective solution for industrial applications. Accordingly, circuit breakers may be widely used for protecting the safety and functionality of electrical infrastructure such as manufacturing, power generation, and construction.

Industrial circuit breakers may come in various types, including Miniature Circuit Breakers (MCB), Molded Case Circuit Breakers (MCCB), and Residual Current Circuit Breakers (RCCB), each tailored to specific requirements and capacities. Some circuit breakers may include features such as adjustable trip settings and/or a range of interrupt rating.

US 2015/0348721 A1 describes a system for maintaining integrity of a switch contact which includes a first resistor-capacitor circuit, a second resistor-capacitor circuit, and a control switch.

### SUMMARY

The presently claimed invention is set out in the independent claims.

A pull-up circuit for circuit breaker contacts is disclosed. The pull-up circuit of the present disclosure is configured to, under the control of a microcontroller, inject a current into a contact of a circuit breaker to remove the oxidation therefrom (which may cause undesired resistance to current flow). The microcontroller may also perform a measurement to determine current flow through the contact. The activation of the pull-up circuit by the microcontroller may be performed periodically to limit the build-up of oxidation on the contact of the fuse, with each activation lasting for a predetermined time period.

In some embodiments, a system includes a pull-up circuit having a pull-up terminal that may be connected to a terminal of the circuit breaker, and further including a measurement terminal. A microcontroller in communication with the pull-up circuit is configured to assert an activation signal. The pull-up circuit is configured to draw a current at a first current value, in response to assertion of the activation signal, from the terminal of the circuit breaker, and further configured to cause the current to change to a second current value. The microcontroller is further configured to determine, via the measurement terminal, the second value of the current

### BRIEF DESCRIPTION OF THE DRAWINGS

The above and/or other aspects will become apparent and more readily appreciated from the following description of example embodiments, taken in conjunction with the accompanying drawings, in which:
FIG. 1 is a block diagram of a system including a circuit breaker, a pull-up circuit, and a microcontroller, according to the principles of the present disclosure.
FIG. 2 is a schematic diagram of a pull-up circuit according to the principles of the present disclosure.
FIG. 3 is a diagram illustrating operation of an alternative pull-up circuit according to the principles of the present disclosure.
FIG. 4 is a flow diagram illustrating a method for operating a pull-up circuit using a microcontroller according to the principles of the present disclosure.

### DETAILED DESCRIPTION

Reference will now be made in detail to example embodiments which are illustrated in the accompanying drawings, wherein like reference numerals refer to like elements throughout. In this regard, the example embodiments may have different forms and may not be construed as being limited to the descriptions set forth herein.

It will be understood that the terms "include," "including," "comprise," and/or "comprising," when used in this specification, specify the presence of stated features, integers, steps, operations, elements, and/or components, but do not preclude the presence or addition of one or more other features, integers, steps, operations, elements, components, and/or groups thereof.

It will be further understood that, although the terms "first," "second," "third," etc., may be used herein to describe various elements, components, regions, layers and/or sections, these elements, components, regions, layers and/or sections may not be limited by these terms. These terms are only used to distinguish one element, component, region, layer or section from another element, component, region, layer or section.

As used herein, the term "and/or" includes any and all combinations of one or more of the associated listed items. Expressions such as "at least one of," when preceding a list of elements, modify the entire list of elements and do not modify the individual elements of the list.

Various terms are used to refer to particular system components. Different companies may refer to a component by different names - this document does not intend to distinguish between components that differ in name but not function.

Matters of these example embodiments that are obvious to those of ordinary skill in the technical field to which these example embodiments pertain may not be described herein in detail.

It may be understood that the example embodiments described herein may be considered in a descriptive sense only and not for purposes of limitation. Descriptions of features or aspects within each example embodiment may be considered as available for other similar features or aspects in other example embodiments.

Industrial circuit breakers typically include auxiliary contact, which are used to monitor their position (open or closed). Such contacts are often made using low quality metals, such as silver-nickel. Over time, such metal are susceptible to oxidation. This can lead to high resistance in the electrical contacts of a circuit breaker, particularly if its position changes on an infrequent basis.

Manufacturers of circuit breakers often times specify a minimum amount of current that can flow into a contact in order to burn through a partial oxidation layer and thus lower the contact resistance. One technique to facilitate burning through the oxidation layer involves a capacitor connected in parallel with a circuit breaker. The capacitor may be charged while the circuit breaker is open. When the circuit breaker is closed, the capacitor may discharge while providing enough current to burn through the oxidation layer (this may be referred to as "wetting" the contact). However, this technique requires changing between the open and closed positions of the circuit breaker. Since the position of a given circuit breaker may seldom change (e.g., due to being part of a mission critical application), this technique may be insufficient to deal with the oxidation that may occur on the circuit breaker contacts.

The present disclosure provides a circuit and method for periodically applying a current to contacts (or terminals) of a circuit breaker in order to reduce or eliminate an oxidation layer that may otherwise accumulate. In some embodiments, a pull-up circuit includes a pull-up terminal coupled to a terminal (contact) of a circuit breaker. A microcontroller in communication with the pull-up circuit may periodically activate the pull-up circuit by asserting an activation signal. In response to assertion of the activation signal, the pull-up circuit may generate a pull-up voltage that causes it to draw a current from (and thus through) the terminal of the circuit breaker to which it is coupled. The current may initially be drawn at a first value that may reduce or eliminate oxidation on the terminal of the circuit breaker. Over time, the current may change to a second (e.g., smaller) value. The microcontroller may include a measurement input coupled to the pull-up circuit, and may thus take a measurement of the current. In some embodiments, the measured current may be a value of the second current, with the measurement being carried out near the end of a predetermined time period just prior to the microcontroller de-asserting the activation signal. Response to de-assertion of the activation signal, the pull-up circuit may discontinue drawing current from the terminal of the circuit breaker.

The process above may be carried out periodically to prevent the accumulation of oxidation on the corresponding terminal of the circuit breaker. In each instance, the activation signal may be asserted for a predetermined time period. Furthermore, the process described above may be carried out without the need to change the position of the circuit breaker (e.g., from open to closed and/or vice versa).

The circuits and method of the present disclosure may allow the removal of oxidation from a terminal of a circuit breaker that might otherwise be allowed to accumulate over time. Furthermore, the circuits and methods of the present disclosure may obviate the need for more expensive metals that are not susceptible to (or less susceptible to) oxidation. Additionally, the circuits and methods described herein may remove oxidation without requiring a change to the position (open to closed or vice versa) of the circuit breaker. Embodiments of the circuits and methods are now discussed in further detail below.

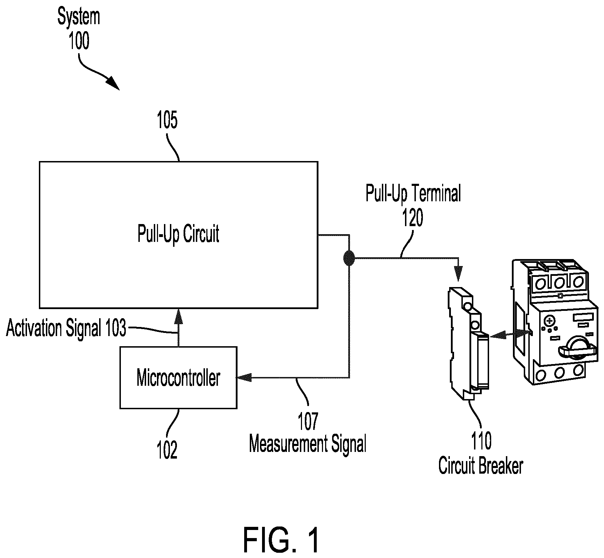

FIG. 1 is a block diagram of a system including a circuit breaker, a pull-up circuit, and a microcontroller. In some embodiments, system 100 includes a microcontroller 102 coupled to a pull-up circuit 105. Pull-up circuit 105 is also coupled to circuit breaker 110 via pull-up terminal 120. In this example, pull-up circuit 105 may cause a current between two different values (40 mA and 10 mA in this non-limiting example) to flow through the contact of circuit breaker 110 to which pull-up terminal 120 is coupled. The currents may be used to both reduce or eliminate any oxidation that may have occurred on the contact of the circuit breaker, as well as to provide a basis of measurement to ascertain that the resistance of the contact is within specifications.

Microcontroller 102 may periodically activate pull-up circuit 105 by asserting activation signal 103. In response to assertion of the activation signal 103, pull-up circuit 105 may begin to cause current to flow through pull-up terminal 120, and thus through the contact of circuit breaker 110 to which it is coupled. The activation signal may be held as asserted by microcontroller 102 for a predetermined period. In some embodiments, microcontroller 102 may perform a sample measurement near the end of the predetermined period, using measurement signal 107. Using this measurement, microcontroller 102 may determine if the current is within specified limits. In some embodiments, microcontroller 102 may generate additional signals to alert an operator or technician if the current is not within specified limits. At the end of the predetermined period, microcontroller 102 may de-assert activation signal 103.

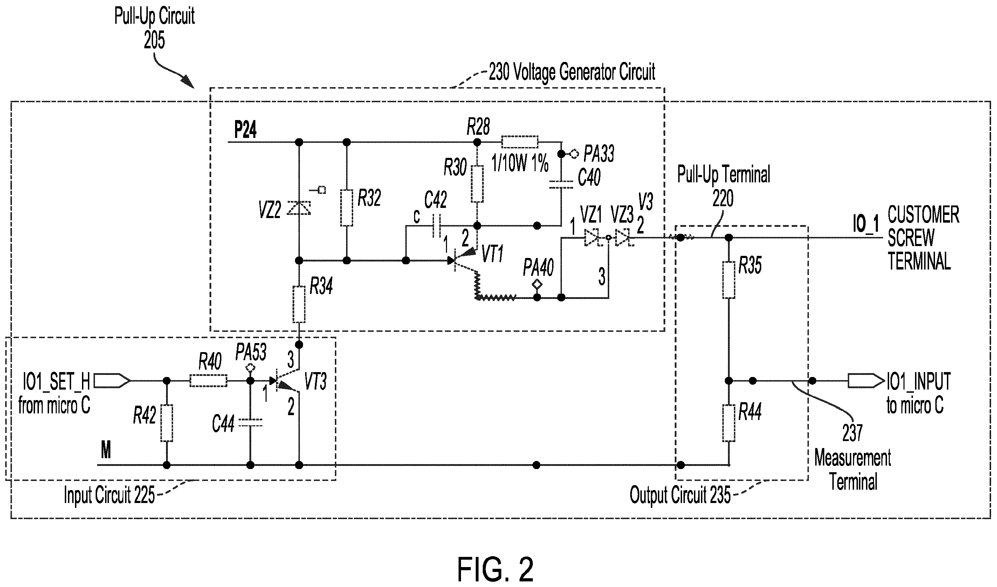

FIG. 2 is a schematic diagram of a pull-up circuit. In some embodiments, pull-up circuit 205 includes an input circuit 225, a voltage generator circuit 230, and an output circuit 235. Input circuit 225 may be configured to receive an activation signal (shown here as IO1_SET_H) from a microcontroller that, when asserted, cause voltage generator circuit 230 to generate a voltage on pull-up terminal 220. Generating the voltage may in turn cause current to flow through a contact of a circuit breaker to which pull-up terminal 220 is coupled. Output circuit 235 may generate, on measurement terminal 237, a measurement signal that may be provided to the microcontroller that may be used to determine the current flowing through the contact. Pull-up circuit 205 may be used with, e.g., a microcontroller such as microcontroller 102 of FIG. 1 in the same or similar configuration in order to generate current to remove an oxidation layer from a contact as well as to measure the current through the contact to ensure that it is within specified limits.

Input circuit 225 includes resistors R40 and R42, capacitor C44, and a transistor VT3. In some embodiments, transistor VT3 is a bipolar transistor, and more particularly, and NPN transistor. When the activation signal is asserted, VT3 may draw current though its collector terminal, and thus generating a pull-down path through R34 of voltage generator circuit 230. When the activation signal is de-asserted, the voltage on the base terminal of transistor VT3 may be such that the device is in cutoff, with no current flowing between its collector and emitter.

Voltage generator circuit 230 includes resistors R28, R30, R32, and R34, capacitors C40 and C42, diodes VZ1, VZ2, and VZ3 (zener diodes in this implementation), and transistor VT1. As shown here, transistor VT1 is a bipolar PNP transistor. It is noted however that embodiments are possible and contemplated in which other types of transistors are used in pull-up circuit 205. For example, embodiments in which VT1 is implemented as a PMOS transistor while VT3 is implemented as an NMOS transistor are possible and contemplated.

When transistor VT3 generates the pull-down path through R34, the voltage on the junction of R34 and the base of VT1 may fall. When the voltage on its base falls sufficiently, VT1 may become forward biased, with a pull-up path being generated through its collector and emitter terminals. This in turn generates a voltage on pull-up terminal 220 that causes current to flow through a contact of a circuit breaker to which this terminal is coupled.

When initially activated, voltage generator circuit 230 may generate the voltage on pull-up terminal 220 at a first voltage value, thereby causing current to flow at a first current value. During the time that the activation signal is asserted, capacitors C40 and C42 will discharge, and thus the voltage on pull-up terminal 220 will decrease. Correspondingly, the current generated via pull-up terminal 220 will also decrease until it reaches a second current value. This second current value may be a steady-state value, and may remain as such until the activation signal is de-asserted.

When the activation signal is de-asserted and VT3 enters cutoff, the voltage on the base of VT1 may rise sufficiently to cause that device to also enter cutoff. Thereafter, the pull-up path is no longer present, and thus no further current is generated by a voltage on pull-up terminal 220. Meanwhile, with VT1 and VT3 in cutoff, capacitors C40 and C42 are charged by a supply voltage on node P24, via resistors R28 and R30. The charge on capacitor C42 may cause VT1 to remain in cutoff until the next activation of VT3. Meanwhile, the charge on C40 may be stored until VT3 is active, discharging thereafter to vary the voltage on pull-up terminal 220.

Output circuit 235 includes a voltage divider circuit comprising resistors R35 and R44, which are coupled in series between pull-up terminal 220 and a ground node. At the junction of R35 and R44 is a measurement terminal where a measurement signal is generated as a voltage, with the generated voltage corresponding to the current flowing through the contact of the circuit breaker and pull-up terminal 220. This measurement signal may be provided to the microcontroller to determine the current through the contact. In some embodiments, the measurement may be performed near the end of the predetermined time, just prior to the microcontroller de-asserting the activation signal. However, embodiments are possible and contemplated in which the microcontroller provides a continuous measurement of the current in order to determine the response of voltage generator circuit 230 and the current through the correspondingly coupled contact of the circuit breaker.

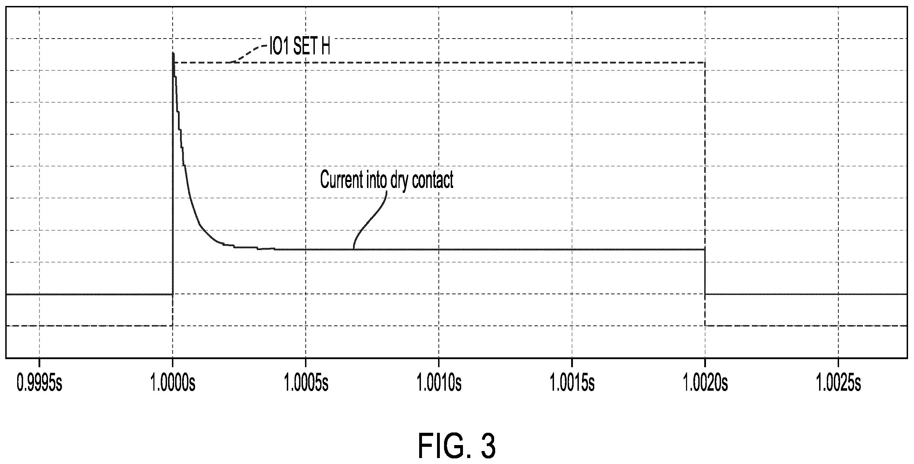

FIG. 3 is a diagram illustrating operation of a pull-up circuit. In particular, FIG. 3 illustrates an example current generated in response to assertion of the activation signal for the pull-up circuit of FIG. 2. In the illustrated example, in response to the assertion of the activation signal (IO1_SET_H), the current initially rises to a first current value, or a peak value. The peak value may be sufficient to remove or eliminate any oxidation that may have built up on the contact of the circuit breaker during the time that the activation signal was de-asserted.

After initially rising to its peak value, the current begins to fall as the capacitors of the circuit discharge until it reaches a second current value, or steady state value. This value may be reached after the capacitors of voltage generator circuit 230 illustrated in FIG. 2 have discharged while the activation signal otherwise remains asserted. As noted above, in various embodiments, a measurement of the current may be performed at some point during the time period that the activation signal is asserted. In some embodiments, this measurement may be taken just prior to de-assertion of the activation signal to ensure that the steady state current is sufficient (and thus, resistance from any oxide build-up on the contact of the circuit breaker is low enough so as to not adversely affect its operation). After de-assertion of the activation signal, as shown in FIG. 3, the current may fall to zero or to a negligible value.

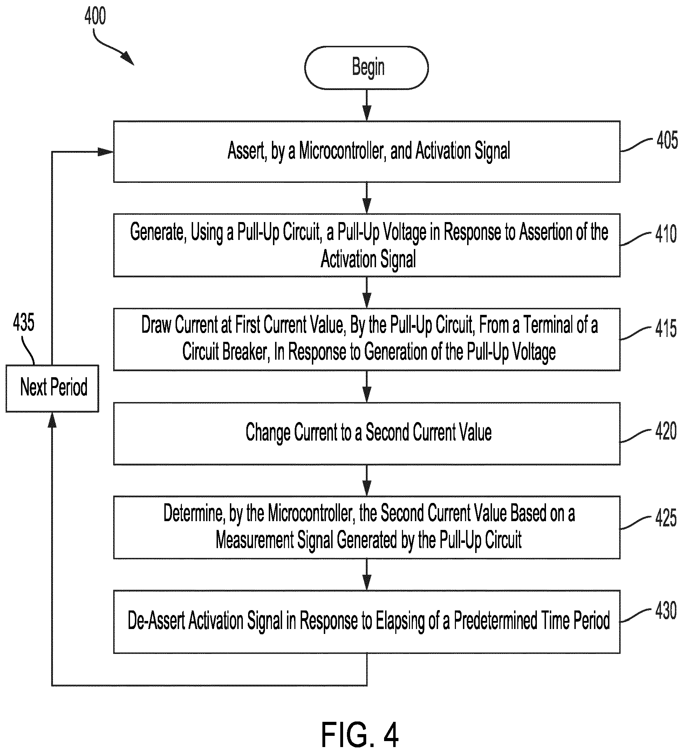

FIG. 4 is a flow diagram illustrating a method for operating a pull-up circuit using a microcontroller. Method 400 may be carried out by various embodiments of the circuits and microcontroller discussed above. Embodiments of hardware capable of carrying out Method 400, but not otherwise disclosed herein, are considered to fall within the scope of this disclosure.

Method 400 includes asserting, by a microcontroller, an activation signal (block 405). In response to the asserting, the method further includes generating, using a pull-up circuit, a pull-up voltage in response to asserting the activation signal (block 410). The method further includes, in response to generation of the pull-up voltage, drawing a current at a first current value, by the pull-up circuit, from a terminal of a circuit breaker and in response to generation of the pull-up voltage (block 415). Thereafter, the method includes changing the current to a second current value (block 420). The method also includes determining, by the microcontroller, the second current value based on a measurement signal generated by the pull-up circuit (block 425) and subsequently de-asserting the activation signal in response to elapsing of a predetermined time has elapsed (block 430). Subsequent to the de-assertion, the method progresses to the next period (block 435), at which the various method steps are repeated beginning at a next scheduled time.

While example embodiments have been described with reference to the figures, it will be understood by those of ordinary skill in the art that various changes in form and details may be made therein without departing from the scope as defined by the following claims.

## Claims

1. An apparatus comprising:
a circuit breaker (110);
a pull-up circuit (105, 205) having a pull-up terminal (120, 220) coupled to a terminal of the circuit breaker and a measurement terminal (237); and
a microcontroller (102) in communication with the pull-up circuit, wherein the microcontroller is configured to assert an activation signal (103), **characterised in that** the pull-up circuit is configured to:
draw a current from and through the terminal of the circuit breaker at a first current value, in response to assertion of the activation signal; and
cause the current to change to a second current value; and
wherein the microcontroller is configured to determine, via the measurement terminal, the second value of the current.

2. The apparatus of claim 1, wherein the microcontroller (102) is further configured to:
periodically assert the activation signal (103) for a predetermined time;
de-assert the activation signal in response to elapsing of the predetermined time; and
determine the second current value prior to the predetermined time elapsing, wherein the second current value is less than the first current value.

3. The apparatus of claim 1 or claim 2, wherein the pull-up circuit (105, 205) includes:
an input circuit (225) coupled to receive the activation signal (103) from the microcontroller (102);
a voltage generator circuit (230) configured to generate a pull-up voltage; and
an output circuit (235) configured to draw the current via the pull-up terminal (120, 220) and further configured to generate a measurement signal (107) on the measurement terminal (237).

4. The apparatus of claim 3, wherein the input circuit (225) includes a first transistor (VT3) configured to be activated in response to assertion of the activation signal (103).

5. The apparatus of claim 4, wherein the voltage generator circuit (230) includes a second transistor (VT1) configured to be activated in response to activation of the first transistor (VT3).

6. The apparatus of claim 5, wherein the voltage generator circuit (230) is configured to generate the pull-up voltage in response to activation of the second transistor (VT1), and/or wherein the first transistor (VT3) and the second transistor (VT1) are bipolar transistors.

7. The apparatus of claim 5 or claim 6, wherein the pull-up circuit (105, 205) includes a first capacitor configured to inhibit activation of the second transistor (VT1) when the first transistor (VT3) is inactive, and further includes a second capacitor configured to discharge through the second transistor when the second transistor is active.

8. The apparatus of any of claims 3-7, wherein the output circuit (235) includes a voltage divider having first and second resistors (R35, R44) coupled in series between the pull-up terminal (220) and a ground terminal, wherein the measurement terminal (237) is coupled to a junction of the first and second resistors.

9. The apparatus of any of claims 3-8, wherein the microcontroller (102) is configured to determine the second value of the current based on a voltage of the measurement signal (107) on the measurement terminal (237).

10. A method comprising:
asserting, by a microcontroller (102), an activation signal (103);
generating, using a pull-up circuit (105, 205), a pull-up voltage in response to asserting the activation signal;
drawing a current from and through a terminal of a circuit breaker (110) at a first current value, by the pull-up circuit, in response to generation of the pull-up voltage;
changing the current to a second current value;
determining, by the microcontroller, the second current value based on a measurement signal (107) generated by the pull-up circuit; and
de-asserting the activation signal in response to elapsing of a predetermined time.

11. The method of claim 10, further comprising:
periodically asserting, using the microcontroller (102), the activation signal (103) for a predetermined time;
de-asserting the activation signal in response to elapsing of the predetermined time; and
determining, using the microcontroller, the second current value prior to the predetermined time elapsing, wherein the second current value is less than the first current value.

12. The method of claim 10 or claim 11, further comprising:
receiving the activation signal (103), at an input circuit (225), from the microcontroller (102);
generating, using a voltage generator circuit (230) of the pull-up circuit (105, 205), a pull-up voltage;
drawing current, using an output circuit (235), via a pull-up terminal (120, 220) of the pull-up circuit; and
generating, using the output circuit, a measurement signal (107) on a measurement terminal (237) of the pull-up circuit.

13. The method of claim 12, further comprising:
activating a first transistor (VT3) of the input circuit (225) in response to assertion of the activation signal (103); and
activating a second transistor (VT1) of the voltage generator circuit (230) in response to activation of the first transistor, and optionally:
generating the pull-up voltage in response to activation of the second transistor, wherein the first and second transistors are bipolar transistors; and
inhibiting activation of the second transistor, using a first capacitor of the pull-up circuit (105, 205), when the first transistor is inactive; and
discharging a second capacitor of the pull-up circuit, through the second transistor, when the second transistor is active.

14. The method of claim 12 or claim 13, wherein the output circuit (235) includes a voltage divider having first and second resistors (R35, R44) coupled in series between the pull-up terminal (120, 220) and a ground terminal, and wherein the method further comprises generating the measurement signal (107) on a junction of the first and second resistors, wherein the junction of the first and second resistors is coupled to the measurement terminal (237).

15. The method of any of claims 10-14, further comprising determining, using the microcontroller (102), the second value of the current based on a voltage of the measurement signal (107).

## Patentansprüche

1. Einrichtung, umfassend:
einen Leistungsschalter (110);
einen Pull-up-Schaltkreis (105, 205) mit einem Pull-up-Anschluss (120, 220), der mit einem Anschluss des Leistungsschalters gekoppelt ist, und einem Messanschluss (237); und
einen Mikrocontroller (102) in Kommunikation mit der Pull-up-Schaltung, wobei der Mikrocontroller dazu ausgelegt ist, ein Aktivierungssignal (103) zu setzen, **dadurch gekennzeichnet, dass** die Pull-up-Schaltung zu Folgendem ausgelegt ist:
Ziehen eines Stroms von und durch den Anschluss des Leistungsschalters mit einem ersten Stromwert als Reaktion auf das Setzen des Aktivierungssignals; und
Bewirken, dass sich der Strom auf einen zweiten Stromwert ändert; und
wobei der Mikrocontroller dazu ausgelegt ist, über das Messendgerät den zweiten Wert des Stroms zu bestimmen.

2. Einrichtung nach Anspruch 1, wobei der Mikrocontroller (102) ferner zu Folgendem konfiguriert ist:
periodisches Setzen des Aktivierungssignals (103) für eine vorbestimmte Zeit;
Zurücksetzen des Aktivierungssignals als Reaktion auf das Verstreichen der vorbestimmten Zeit; und
Bestimmen des zweiten Stromwerts vor Ablauf der vorbestimmten Zeit, wobei der zweite Stromwert kleiner als der erste Stromwert ist.

3. Einrichtung nach Anspruch 1 oder Anspruch 2, wobei die Pull-up-Schaltung (105, 205) Folgendes beinhaltet:
eine Eingangsschaltung (225), die zum Empfangen des Aktivierungssignals (103) von dem Mikrocontroller (102) gekoppelt ist;
eine Spannungsgeneratorschaltung (230), die dazu ausgelegt ist, eine Pull-up-Spannung zu generieren; und
eine Ausgangsschaltung (235), die dazu ausgelegt ist, den Strom über den Pull-up-Anschluss (120, 220) zu ziehen, und ferner dazu ausgelegt ist, ein Messsignal (107) an dem Messanschluss (237) zu generieren.

4. Einrichtung nach Anspruch 3, wobei die Eingangsschaltung (225) einen ersten Transistor (VT3) beinhaltet, der dazu ausgelegt ist, als Reaktion auf das Aktivieren des Aktivierungssignals (103) aktiviert zu werden.

5. Einrichtung nach Anspruch 4, wobei die Spannungsgeneratorschaltung (230) einen zweiten Transistor (VT1) beinhaltet, der dazu ausgelegt ist, als Reaktion auf eine Aktivierung des ersten Transistors (VT3) aktiviert zu werden.

6. Einrichtung nach Anspruch 5, wobei die Spannungsgeneratorschaltung (230) dazu ausgelegt ist, die Pull-up-Spannung als Reaktion auf eine Aktivierung des zweiten Transistors (VT1) zu generieren, und/oder wobei der erste Transistor (VT3) und der zweite Transistor (VT1) Bipolartransistoren sind.

7. Einrichtung nach Anspruch 5 oder Anspruch 6, wobei die Pull-up-Schaltung (105, 205) einen ersten Kondensator beinhaltet, der dazu ausgelegt ist, eine Aktivierung des zweiten Transistors (VT1) zu unterbinden, wenn der erste Transistor (VT3) inaktiv ist, und ferner einen zweiten Kondensator beinhaltet, der dazu ausgelegt ist, sich durch den zweiten Transistor zu entladen, wenn der zweite Transistor aktiv ist.

8. Einrichtung nach einem der Ansprüche 3-7, wobei die Ausgangsschaltung (235) einen Spannungsteiler mit einem ersten und einem zweiten Widerstand (R35, R44) beinhaltet, die zwischen dem Pull-up-Anschluss (220) und einem Masseanschluss in Reihe geschaltet sind, wobei der Messanschluss (237) mit einem Übergang des ersten und des zweiten Widerstands gekoppelt ist.

9. Einrichtung nach einem der Ansprüche 3-8, wobei der Mikrocontroller (102) dazu ausgelegt ist, den zweiten Wert des Stroms basierend auf einer Spannung des Messsignals (107) an dem Messanschluss (237) zu bestimmen.

10. Verfahren, umfassend:
Setzen, durch einen Mikrocontroller (102), eines Aktivierungssignals (103);
Generieren, unter Verwendung einer Pull-up-Schaltung (105, 205), einer Pull-up-Spannung als Reaktion auf das Setzen des Aktivierungssignals;
Ziehen eines Stroms von und durch einen Anschluss eines Leistungsschalters (110) mit einem ersten Stromwert durch die Pull-up-Schaltung als Reaktion auf die Generierung der Pull-up-Spannung;
Ändern des Stroms auf einen zweiten Stromwert;
Bestimmen, durch den Mikrocontroller, des zweiten Stromwerts basierend auf einem Messsignal (107), das durch die Pull-up-Schaltung generiert wird; und
Zurücksetzen des Aktivierungssignals als Reaktion auf das Verstreichen einer vorbestimmten Zeit.

11. Verfahren nach Anspruch 10, ferner umfassend:
periodisches Setzen, unter Verwendung des Mikrocontrollers (102), des Aktivierungssignals (103) für eine vorbestimmte Zeit;
Zurücksetzen des Aktivierungssignals als Reaktion auf das Verstreichen der vorbestimmten Zeit; und
Bestimmen, unter Verwendung des Mikrocontrollers, des zweiten Stromwerts vor Ablauf der vorbestimmten Zeit, wobei der zweite Stromwert kleiner als der erste Stromwert ist.

12. Verfahren nach Anspruch 10 oder Anspruch 11, ferner umfassend:
Empfangen des Aktivierungssignals (103) an einer Eingangsschaltung (225) von dem Mikrocontroller (102);
Generieren, unter Verwendung einer Spannungsgeneratorschaltung (230) der Pull-up-Schaltung (105, 205), einer Pull-up-Spannung;
Ziehen von Strom unter Verwendung einer Ausgangsschaltung (235) über einen Pull-up-Anschluss (120, 220) der Pull-up-Schaltung; und
Generieren, unter Verwendung der Ausgangsschaltung, eines Messsignals (107) an einem Messanschluss (237) der Pull-Up-Schaltung.

13. Verfahren nach Anspruch 12, ferner umfassend:
Aktivieren eines ersten Transistors (VT3) der Eingangsschaltung (225) als Reaktion auf das Setzen des Aktivierungssignals (103); und
Aktivieren eines zweiten Transistors (VT1) der Spannungsgeneratorschaltung (230) als Reaktion auf eine Aktivierung des ersten Transistors, und optional:
Generieren der Pull-up-Spannung als Reaktion auf eine Aktivierung des zweiten Transistors, wobei der erste und der zweite Transistor Bipolartransistoren sind; und
Unterbinden einer Aktivierung des zweiten Transistors unter Verwendung eines ersten Kondensators der Pull-up-Schaltung (105, 205), wenn der erste Transistor inaktiv ist; und
Entladen eines zweiten Kondensators der Pull-up-Schaltung durch den zweiten Transistor, wenn der zweite Transistor aktiv ist.

14. Verfahren nach Anspruch 12 oder Anspruch 13, wobei die Ausgangsschaltung (235) einen Spannungsteiler mit einem ersten und einem zweiten Widerstand (R35, R44) beinhaltet, die zwischen dem Pull-up-Anschluss (120, 220) und einem Masseanschluss in Reihe geschaltet sind, und wobei das Verfahren ferner Generieren des Messsignals (107) an einem Übergang des ersten und zweiten Widerstands umfasst, wobei der Übergang des ersten und zweiten Widerstands mit dem Messanschluss (237) gekoppelt ist.

15. Verfahren nach einem der Ansprüche 10-14, ferner umfassend Bestimmen, unter Verwendung des Mikrocontrollers (102), des zweiten Werts des Stroms basierend auf einer Spannung des Messsignals (107).

## Revendications

1. Appareil comprenant :
un disjoncteur (110) ;
un circuit de tirage vers le haut (105, 205) ayant une borne de tirage vers le haut (120, 220) couplée à une borne du disjoncteur et une borne de mesure (237) ; et
un microcontrôleur (102) en communication avec le circuit de tirage vers le haut, où le microcontrôleur est configuré pour valider un signal d'activation (103), **caractérisé en ce que** le circuit de tirage vers le haut est configuré pour :
prélever un courant depuis et à travers la borne du disjoncteur à une première valeur de courant, en réponse à la validation du signal d'activation ; et
faire passer le courant à une seconde valeur de courant ; et
le microcontrôleur étant configuré pour déterminer, par l'intermédiaire de la borne de mesure, la seconde valeur du courant.

2. Appareil selon la revendication 1, dans lequel le microcontrôleur (102) est en outre configuré pour :
valider périodiquement le signal d'activation (103) pendant une durée prédéterminée ;
invalider le signal d'activation en réponse à l'écoulement de la durée prédéterminée ; et
déterminer la seconde valeur de courant avant l'écoulement de la durée prédéterminée, la seconde valeur de courant étant inférieure à la première valeur de courant.

3. Appareil selon la revendication 1 ou la revendication 2, dans lequel le circuit de tirage vers le haut (105, 205) comporte :
un circuit d'entrée (225) couplé pour recevoir le signal d'activation (103) en provenance du microcontrôleur (102) ;
un circuit générateur de tension (230) configuré pour générer une tension de tirage vers le haut ; et
un circuit de sortie (235) configuré pour prélever le courant via la borne de tirage vers le haut (120, 220) et configuré en outre pour générer un signal de mesure (107) sur la borne de mesure (237).

4. Appareil selon la revendication 3, dans lequel le circuit d'entrée (225) comporte un premier transistor (VT3) configuré pour être activé en réponse à la validation du signal d'activation (103).

5. Appareil selon la revendication 4, dans lequel le circuit générateur de tension (230) comporte un second transistor (VT1) configuré pour être activé en réponse à l'activation du premier transistor (VT3).

6. Appareil selon la revendication 5, dans lequel le circuit générateur de tension (230) est configuré pour générer la tension de tirage vers le haut en réponse à l'activation du second transistor (VT1), et/ou dans lequel le premier transistor (VT3) et le second transistor (VT1) sont des transistors bipolaires.

7. Appareil selon la revendication 5 ou la revendication 6, dans lequel le circuit de tirage vers le haut (105, 205) comporte un premier condensateur configuré pour inhiber l'activation du second transistor (VT1) lorsque le premier transistor (VT3) est inactif, et comporte en outre un second condensateur configuré pour se décharger à travers le second transistor lorsque le second transistor est actif.

8. Appareil selon l'une quelconque des revendications 3 à 7, dans lequel le circuit de sortie (235) comporte un diviseur de tension ayant des première et seconde résistances (R35, R44) couplées en série entre la borne de tirage vers le haut (220) et une borne de masse, la borne de mesure (237) étant couplée à une jonction des première et seconde résistances.

9. Appareil selon l'une quelconque des revendications 3 à 8, dans lequel le microcontrôleur (102) est configuré pour déterminer la seconde valeur du courant sur la base d'une tension du signal de mesure (107) sur la borne de mesure (237).

10. Procédé comprenant :
la validation, par un microcontrôleur (102), d'un signal d'activation (103) ;
la génération, à l'aide d'un circuit de tirage vers le haut (105, 205), d'une tension de tirage vers le haut en réponse à la validation du signal d'activation ;
le prélèvement d'un courant depuis et à travers une borne d'un disjoncteur (110) à une première valeur de courant, par le circuit de tirage vers le haut, en réponse à la génération de la tension de tirage vers le haut ;
le passage du courant à une seconde valeur de courant ;
la détermination, par le microcontrôleur, de la seconde valeur de courant sur la base d'un signal de mesure (107) généré par le circuit de tirage vers le haut ; et
l'invalidation du signal d'activation en réponse à l'écoulement d'une durée prédéterminée.

11. Procédé selon la revendication 10, comprenant en outre :
la validation périodique du signal d'activation (103) pendant une durée prédéterminée, à l'aide du microcontrôleur (102) ;
l'invalidation du signal d'activation en réponse à l'écoulement de la durée prédéterminée ; et
la détermination, à l'aide du microcontrôleur, de la seconde valeur de courant avant l'écoulement de la durée prédéterminée, la seconde valeur de courant étant inférieure à la première valeur de courant.

12. Procédé selon la revendication 10 ou la revendication 11, comprenant en outre :
la réception du signal d'activation (103), au niveau d'un circuit d'entrée (225), en provenance du microcontrôleur (102) ;
la génération d'une tension de tirage vers le haut, à l'aide d'un circuit générateur de tension (230) du circuit de tirage vers le haut (105, 205) ;
le prélèvement d'un courant, à l'aide d'un circuit de sortie (235), par l'intermédiaire d'une borne de tirage vers le haut (120, 220) du circuit de tirage vers le haut ; et
la génération d'un signal de mesure (107) sur une borne de mesure (237) du circuit de tirage vers le haut, à l'aide du circuit de sortie.

13. Procédé selon la revendication 12, comprenant en outre :
l'activation d'un premier transistor (VT3) du circuit d'entrée (225) en réponse à la validation du signal d'activation (103) ; et
l'activation d'un second transistor (VT1) du circuit générateur de tension (230) en réponse à l'activation du premier transistor, et optionnellement :
la génération de la tension de tirage vers le haut en réponse à l'activation du second transistor, où les premier et second transistors sont des transistors bipolaires ; et
l'empêchement de l'activation du second transistor, à l'aide d'un premier condensateur du circuit de tirage vers le haut (105, 205), lorsque le premier transistor est inactif ; et
la décharge d'un second condensateur du circuit de tirage vers le haut, à travers le second transistor, lorsque le second transistor est actif.

14. Procédé selon la revendication 12 ou la revendication 13, dans lequel le circuit de sortie (235) comprend un diviseur de tension ayant des première et seconde résistances (R35, R44) couplées en série entre la borne de tirage vers le haut (120, 220) et une borne de masse, et dans lequel le procédé comprend en outre la génération du signal de mesure (107) sur une jonction des première et seconde résistances, la jonction des première et seconde résistances étant couplée à la borne de mesure (237).

15. Procédé selon l'une quelconque des revendications 10 à 14, comprenant en outre la détermination, à l'aide du microcontrôleur (102), de la seconde valeur du courant sur la base d'une tension du signal de mesure (107).
